# EUROPEAN PATENT APPLICATION

(11) **EP 4 550 852 A1**
(43) Date of publication of application: **07.05.2025**
(21) Application number: 24201996.6
(22) Date of filing: 23.09.2024
(51) Int. Cl.: H04W 4/02, H04W 64/00

(54) **SYSTEM AND TERMINAL**

(30) Priority: 02.11.2023 JP 2023188869
(71) Applicant: TOYOTA JIDOSHA KABUSHIKI KAISHA, Toyota-shi Aichi-ken 471-8571 (JP)
(72) Inventor: SHAO, Xiao, Toyota-shi, Aichi-ken, 471-8571 (JP); AONO, Kazumi, Toyota-shi, Aichi-ken, 471-8571 (JP)
(74) Representative: Simmons & Simmons

(57) **Abstract**

A system (100) constituting a wireless communication network comprises a processor (21), and the processor (21) being configured to execute; receiving an acquisition request to acquire information indicating a travel direction of a detection target object (300); and transmitting, based on the acquisition request, first sensing information, which is a sensing result of the detection target object (300), the first sensing information including information indicating the travel direction of the detection target object (300).

## Description

### CROSS REFERENCE TO THE RELATED APPLICATION

This application claims the benefit of Japanese Patent Application No. 2023-188869, filed on November 02, 2023, which is hereby incorporated by reference herein in its entirety.

### BACKGROUND

### Technical Field

The present disclosure relates to a system and a terminal in a 5GC network.

### Description of the Related Art

There is known a technology for judging position information and the like about a UE (a terminal) by 5GC sensing.

With regard to this, for example, Japanese Patent Laid-Open No. 2023-051398 discloses an information processing system that judges position information and movement direction information about a vehicle by associating handover information with base station topology.

### SUMMARY

An object of the present disclosure is to notify the travel direction of an object inquired by a UE (a terminal).

One aspect of an embodiment of the present disclosure is a system constituting a wireless communication network, the system comprising a processor, and the processor being configured to execute: receiving an acquisition request to acquire information indicating a travel direction of a detection target object; and transmitting, based on the acquisition request, first sensing information, which is a sensing result of the detection target object, the first sensing information including information indicating the travel direction of the detection target object.

Another aspect of an embodiment of the present disclosure is a terminal executing: transmitting an acquisition request to acquire information indicating a travel direction of a detection target object, to a core network; and acquiring, from the core network, first sensing information, which is a sensing result of the detection target object, including information indicating the travel direction of the detection target object.

Other aspects include a method to be implemented by the above-described system and terminal, a program for causing a computer to execute the method, or a computer-readable storage medium non-transitorily storing the program.

According to the present disclosure, it is possible to notify the travel direction of an object inquired by a UE (a terminal).

### BRIEF DESCRIPTION OF THE DRAWINGS

Fig. 1 is a diagram exemplifying components of a system according to an embodiment;
Fig. 2A is a diagram illustrating a configuration example of an information processing apparatus capable of operating as the system according to the embodiment;
Fig. 2B is a diagram illustrating a configuration example of an apparatus capable of operating as a terminal of the system according to the embodiment;
Fig. 3 is a sequence diagram of a sensing process executed by a controller of the system according to the embodiment;
Fig. 4 is a flowchart of the sensing process executed by the controller of the system according to the embodiment;
Fig. 5 is a flowchart of a process for determining the travel direction of an object based on order of having connected to base stations, which is executed by the controller of the system according to the embodiment;
Fig. 6 is a conceptual diagram illustrating that a first terminal of the system according to the embodiment connects to a plurality of base stations;
Fig. 7 is a flowchart illustrating a process of the controller of the system according to the embodiment in the case of notifying the travel direction of a detection target object, with the movement direction of the first terminal as a reference; and
Fig. 8 is a conceptual diagram of a process in the case of notifying the travel direction of a detection target object using another UE in the same travel direction.

### DESCRIPTION OF THE EMBODIMENT

It is conceivable to receive a request from a user terminal, detect the position and travel direction of the user terminal, and notify the user terminal of information that includes the position and travel direction of the user terminal. The user terminal is a mobile communication terminal as an example. In such a system, there may be a case where the user terminal desires to acquire not only its own position and travel direction but also the position and travel direction of an object other than the user terminal itself. As an example, the object other than the user terminal can be a mobile communication terminal other than the user terminal. For example, there may be a case where the user terminal desires to acquire the travel direction of an object existing on its own course for safety movement, or the like. Therefore, it is desirable that the system detects not only the position and travel direction of a user terminal that has transmitted a request but also those of any object specified by the user terminal and notifies the user terminal of them.

The present disclosure in its one aspect provides a system constituting a wireless communication network, the system comprising a processor, and the processor being configured to execute: receiving an acquisition request to acquire information indicating a travel direction of a detection target object; and transmitting, based on the acquisition request, first sensing information, which is a sensing result of the detection target object, the first sensing information including information indicating the travel direction of the detection target object.

Examples of the wireless communication network are systems using 5G, 4G, LTE, LTE-A, SUPER 3G, IMT-Advanced, NR, and others, and next generation systems expanded based thereon. Further, other examples of the wireless communication network are IEEE 802.11 (Wi-Fi (R)), IEEE 802.16 (WiMAX (R)), IEEE 802.20, UWB, Bluetooth (R) and other systems, and next generation systems expanded thereon. The wireless communication network may be a system that is a combination of a plurality of systems.

The detection target object is typically a mobile communication terminal other than a user terminal. The detection target object does not have to be a mobile communication terminal. The detection target object may be some object without a communication function.

The travel direction is a direction in which an object travels at the time of the object moving from a certain point toward another point. The travel direction may be shown as the north, south, east, or west or may be shown as an azimuth.

Thereby, the system according to the present disclosure can notify a UE (a terminal) of the travel direction of an object inquired by the UE.

Further, the acquisition request may include a first ID, which is the ID of a first terminal, the first terminal being a terminal connected to the wireless communication network, and the processor may transmit the travel direction of the detection target object determined with the travel direction of the first terminal as a reference, based on the first ID, including the travel direction in the first sensing information.

Thereby, the system according to the present disclosure can relatively identify the travel directions of a detection target object and a UE. Therefore, the system according to the present disclosure can determine the travel direction of a detection target object based on a relative direction relative to the travel direction of a UE that has transmitting a sensing request.

Further, the processor may judge, based on the first ID, whether the travel directions of the first terminal and the detection target object are same or not, and transmit a result of the judgment as the information indicating the travel direction, including the result of the judgment in the first sensing information.

Thereby, the system according to the present disclosure can identify whether the travel directions of a detection target object and a UE are the same or not. Therefore, the system according to the present disclosure can relatively determine the travel direction of a detection target object based on the travel direction of a UE that has transmitting a sensing request.

Further, the processor may transmit a second ID, which is the ID of a second terminal in the same travel direction as the travel direction of the detection target object, as the information indicating the travel direction, including the second ID in the first sensing information.

Thereby, the system according to the present disclosure can provide information about the ID of a UE in the same travel direction as a detection target obj ect.

Further, the processor may transmit order of the detection target object having connected to a plurality of base stations as the information indicating the travel direction, including the order in the first sensing information.

Though a UE (a terminal) that has connected to a core network connects to the nearest base station, the base station to be connected changes as the UE (the terminal) moves. Therefore, if a detection target object is an object that connects to a core network, it is possible to determine the travel direction of the detection target object based on a history of connections between the detection target object and base stations.

Thereby, the system according to the present disclosure can judge the travel direction of a detection target object based on a history of connections of the detection target object with base stations.

A terminal according to the present disclosure executes: transmitting an acquisition request to acquire information indicating a travel direction of a detection target object, to a core network; and acquiring, from the core network, first sensing information, which is a sensing result of the detection target object, including information indicating the travel direction of the detection target object.

Thereby, the terminal according to the present disclosure has effects similar to those of the above system.

A specific embodiment of the present disclosure will be described below based on drawings. A hardware configuration, a module configuration, a functional configuration, and the like described in this embodiment are not intended to limit the technical scope of the disclosure only thereto unless otherwise stated. For example, though description will be made below on a case where the present disclosure is applied to a fifth-generation mobile communication system, the present disclosure may be applied to a mobile communication system of the fourth generation or of a generation after the fifth generation. The present disclosure may also be applied to a mobile communication system specified by a standard other than 3GPP (R) or applied to any wireless or wired communication system other than a mobile communication system. Further, it is assumed that data provided or used by a user terminal is sensing data measured by the user terminal. However, the provided or used may be sensing data measured by something other than a user terminal or may be any data other than sensing data.

### (Embodiment)

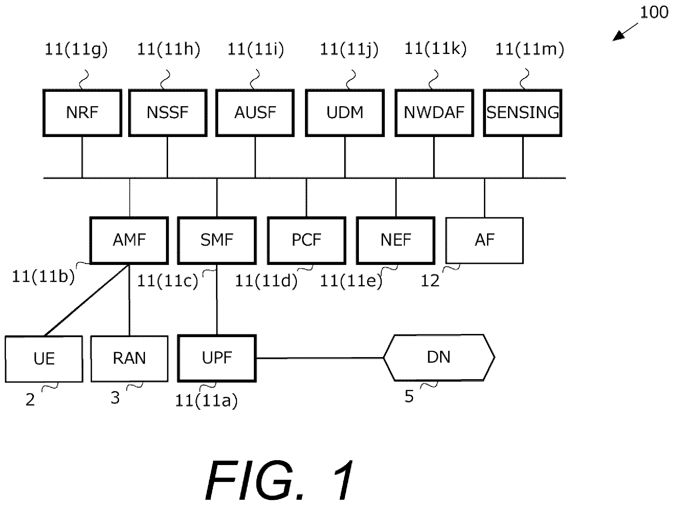

Fig. 1 illustrates components constituting a fifth-generation mobile communication system (a 5G network). In Fig. 1, a UE (user equipment) 2 is a terminal of a user (a subscriber). A RAN (radio access network) 3 is an access network to a 5G core network (5GC). The RAN 3 is configured with a base station (gNB). The 5G network includes the 5G core network (5GC) and an access network ((R) AN), and the UE 2, a DN5, and an AF 12 are connected to the 5G network. Each of NFs 11a to 11m is a function realized by one or more computers (information processing apparatuses) executing a program. A single computer may, however, realize any two or more of the NFs 11a to 11m. Each of the NFs 11a to 11m can also be referred to as a network node or a network component. The components illustrated in Fig. 1 realize a system 100 according to the embodiment.

The 5GC is configured with a set of components called NFs (network functions), each of the components having a predetermined function. In Fig. 1, the following are illustrated as the NFs 11 constituting the 5GC. In Fig. 1, the plurality of elements constituting the NFs 11 are indicated by thick-line rectangles.
UPF (User Plane Function) 11a
AMF (Access and Mobility Management Function) 11b
SMF (Session Management Function) 11c
PCF (Policy Control Function) 11d
NEF (Network Exposure Function) 11e
NRF (Network Repository Function) 11g
NSSF (Network Slice Selection Function) 11h
AUSF (Authentication Server Function) 11i
UDM (Unified Data Management) 11j
NWDAF (Network Data Analytics Function) 11k
SENSING (Sensing Function) 11m

The UPF 11a performs routing, forwarding, packet inspection, and QoS processing of user packets (user-plane packets transmitted/received by the UE 2).

The AMF 1 1b is a UE location accommodation apparatus in the 5GC. The AMF 1 1b accommodates the RAN 3 and performs subscriber authentication control, position (mobility) management of the UE 2, and the like.

The SMF 11c manages a PDU (protocol data unit) session and controls the UPF 11a to perform QoS (quality of service) control and policy control. The PDU session is a virtual communication channel for performing exchange of data between the UE 2 and the DN (data network) 5. The DN 5 is a data network outside the 5GC (such as the Internet).

The PCF 11d performs QoS control, policy control, accounting control, and the like under the control of the SMF 11c. In the QoS control, control of communication quality, such as packet priority forwarding, is performed. In the policy control, communication control for QoS, possibility of packet forwarding, and accounting based on network or subscriber information is performed.

The NEF 11e plays a role of mediating communication between an external node and a node in the control plane.

The NRF 11g stores and manages information about the NFs (for example, the AMF, the SMF, and the UPF) in the 5GC. In response to an inquiry about an NF desired to be used, the NRF 11g can reply to the inquiry source with a plurality of NF candidates.

The NSSF 11h has a function of selecting a network slice to be used by a subscriber from among network slices generated by network slicing. A network slice is a virtual network having specifications corresponding to usage.

The AUSF 11i is a subscriber authentication server that performs subscriber authentication under the control of the AMF 11b.

The UDM 11j holds subscriber-related information and performs provision of subscriber information or acquisition, registration, deletion, and change of the state of the UE 2.

The NWDAF 11k is an NF having a function of performing collection and analysis of data from each NF 11, external servers, and the like. The NWDAF 11k is an NF that provides network analysis information.

The SENSING 11m performs sensing services including collection of sensing information from the UE 2, the RAN 3 (the base station (gNB)), or other nodes and provision of the collected sensing information for the UE 2 or other external systems (the AF 12, the DN 5, and the like). Details of the SENSING 11m will be described later.

The AF 12 is an NF that provides application services via the NRF 11g as a part of the 5GC or an NF that exists outside the 5GC and provides application services via the NEF 11e. The AF 12 performs, for example, processing using sensing data. As an example, the AF 12 notifies an UE (a terminal) of information indicating the position and travel direction of a detection target object acquired by the SENSING 11m. The information does not have to include the position. Further, an application program executed on a UE (a terminal) may operate as the AF 12.

In the 5GC, a plurality of NFs of the same type may be prepared. For example, the NFs 11 may be prepared in each data center (base station building). Further, one NF 11 may be shared among data centers. Further, a plurality of NFs 11 of the same type may be configured in one data center. The number of data centers, the number of NFs 11, correspondence relationships between NFs 11 and data centers can be appropriately set.

### <Configurations of information processing apparatus and terminal>

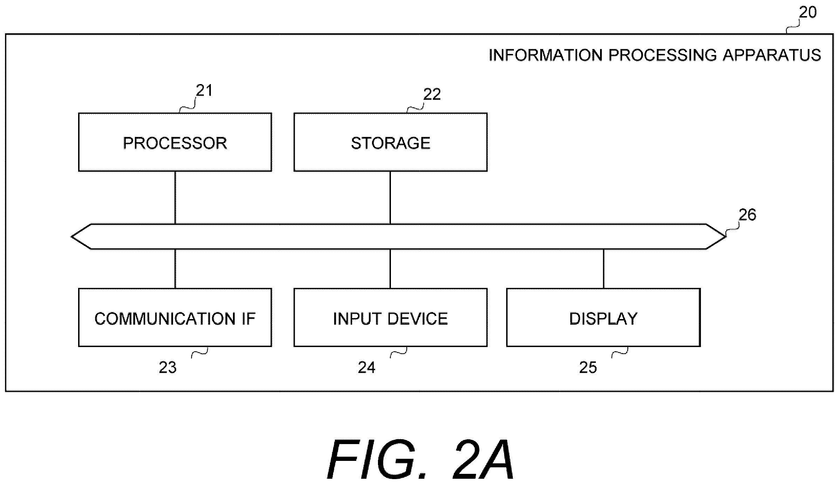

Fig. 2A is a diagram illustrating a configuration example of an information processing apparatus 20 as the system 100 according to the embodiment. In Fig. 2A, the information processing apparatus 20 can be configured with a dedicated or general-purpose information processing apparatus (a computer) such as a personal computer (PC), a work station (WS), or a server machine. The information processing apparatus 20, however, may be an aggregate (a cloud) of one or more computers.

The information processing apparatus 20 includes a processor 21 as a processing unit or a controller, a storage device 22, a communication interface 23 (a communication IF 23), an input device 24, and a display 25 that are mutually connected via a bus 26.

The storage device 22 includes a main memory and an auxiliary storage device. The main memory is used as at least one of a program and data storage area, a program development area, a program work area, a communication data buffer area, and the like. The main memory is configured with a RAM (random access memory) or a combination of a RAM and a ROM (read-only memory). The auxiliary storage device is used as a data and program storage area. A nonvolatile storage medium is applied to the auxiliary storage device. The nonvolatile storage medium is, for example, a hard disk, a solid-state drive (SSD), a flash memory, or an EEPROM (electrically erasable programmable read-only memory). The storage device 22 can include a drive device for disk recording media.

The communication IF 23 is a circuit that performs communication processing. For example, the communication IF 23 is a network interface card (NIC). Further, the communication IF 23 may be a wireless communication circuit that performs wireless communication (5G, wireless LAN (Wi-Fi (R)), BLE, or the like). Further, the communication IF 23 may be a combination of a circuit that performs wired communication processing and a wireless communication circuit.

The input device 24 includes keys, buttons, a pointing device, a touch panel, and the like and is used to input information. The display 25 is, for example, a liquid crystal display and displays information and data.

The processor 21 performs various processing by executing various kinds of programs stored in the storage device 22. By the processor 21 executing a program stored in the storage device 22, the information processing apparatus 20 can operate as each of the NFs 1 1a to 11m, and external servers 12a and 12b. The processor 21 is a specific example of the controller of the system 100.

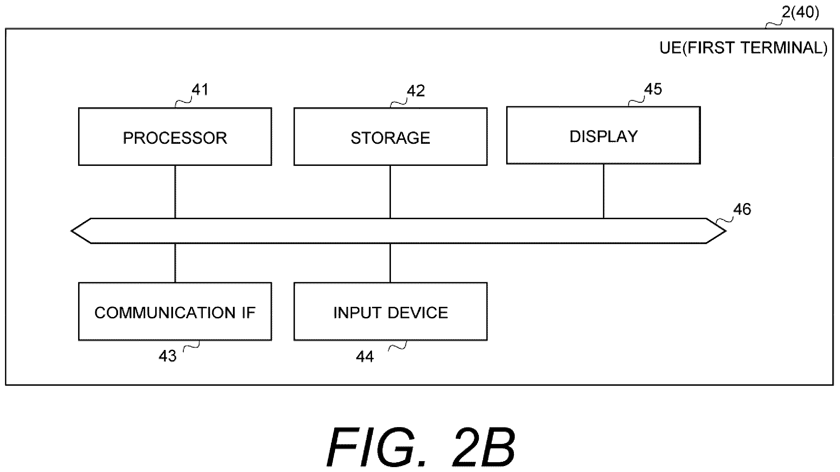

Fig. 2B is a diagram illustrating a configuration example of a terminal 40 that can operate as the UE 2. The terminal 40 is an example of the first terminal. The terminal 40 includes a processor 41, a storage device 42, a communication interface 43 (a communication IF 43), an input device 44, and a display 45 that are mutually connected via a bus 46. As the processor 41, the storage device 42, the communication IF 43, the input device 44, and the display 45, those similar to the processor 21, the storage device 22, the communication IF 23, the input device 24, and the display 25 can be used. Therefore, description thereof will be omitted.

The processors 21 and 41 are, for example, central processing units (CPUs). A CPU is also called a microprocessor unit (MPU). Each of the processors 21 and 41 may be in a single processor configuration or in a multiprocessor configuration. Further, a single physical CPU connected with a single socket may have a multi-core configuration. The processors 21 and 41 may include arithmetic devices in various circuit configurations such as a digital signal processor (DSP) and a graphics processing unit (GPU). Further, each of the processors 21 and 41 may have a configuration of cooperating with at least one of an integrated circuit (IC), another digital circuit, an analog circuit, and the like. The integrated circuit includes an LSI, an application specific integrated circuit (ASIC), a programmable logic device (PLD), and the like. The PLD includes, for example, a field-programmable gate array (FPGA). The processors 21 and 41 include, for example, those that are called a microcontroller (MCU), an SoC (system-on-a-chip), a system LSI, or a chipset.

### <Operation of system>

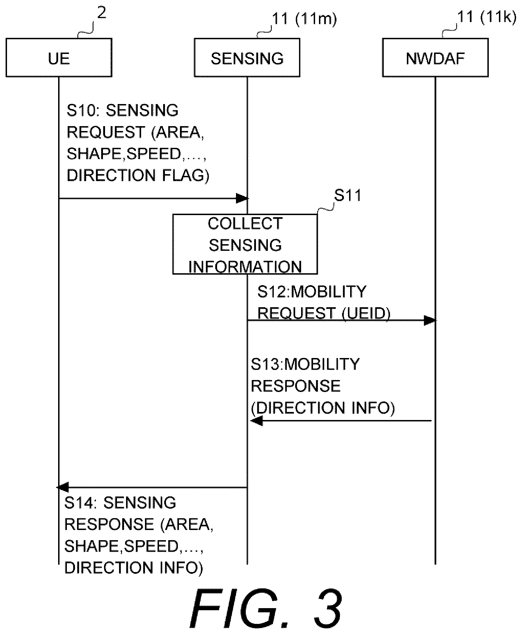

Fig. 3 is a sequence diagram of a sensing process executed by the controller of the system100 according to the embodiment. The sequence diagram illustrated here is an example. A process other than illustrated processes may be included; a part of the illustrated processes may be omitted; and execution order of the illustrated processes may be changed.

In the present operation example, the UE 2 that transmits a sensing request to the SENSING 11m corresponds to a mobile communication terminal that uses the present service, and the SENSING 11m and the NWDAF 11k correspond to applications that provide the present service.

At step S 10, the UE 2 that requests sensing of an object transmits a request message to request sensing data, to the SENSING 11m. The request message includes parameters for identifying the object which is a detection target. The parameters for identifying the detection target object can express, for example, an area in which the detection target object exists, the shape of the detection target object, a movement speed, and a flag indicating a travel direction notification method. A first example of the notification method is a method in which the ID of a predetermined UE is stored in the request message, and the travel direction of the detection target object is notified, with the travel direction of the UE as a reference. As an example of the notification method with the travel direction of a specified UE as a reference, a method of notifying whether the travel direction is the same or different, whether the travel direction is the same or an opposite direction, or an angle or the like specified with the travel direction of a specified UE as a reference is assumed. A second example of the notification method is a method of making the notification using service areas of base stations. By notifying at least two base stations, it is possible to grasp in which direction a detection target object is moving. A third example of the notification method is a method of notifying the ID of another UE in the same travel direction as a detection target object. A fourth example of the notification method is a method of specifying the travel direction of a detection target object by an azimuth. The UE 2 transmits a parameter indicating in which notification method the UE 2 desires the sensing data to be notified, including the parameter in the request message. The UE 2 may transmit the request message to the SENSING 11m via the AF 12.

At step S 11, the SENSING 11m acquires a result of sensing of the detection target object (sensing information). For example, the SENSING 11m transmits a data request message to a base station or a UE other than the UE 2. The data request message also includes parameters for identifying the detection target object. The parameters for identifying the detection target object are similar to those of the request message described above.

The SENSING 11m may acquire a result of wireless sensing that a base station has performed for the detection target object. Further, the SENSING 11m may communicate with a UE other than the UE 2 to acquire a result of wireless sensing that the other UE has performed for the detection target object.

At step S 12, the SENSING 11m that has received the request message from the UE 2 transmits a mobility request message to the NWDAF 11k. The mobility request message includes the UE ID of the detection target object.

At step S 13, the NWDAF 11k transmits a mobility response that includes statistical information and the like corresponding to the UE ID of the object that is the detection target. The mobility response includes a result of analyzing the travel direction of the detection target object. The travel direction of the detection target object may be shown as a handover history of the detection target object having connected to base stations.

At step S14, the SENSING 11m that has received the mobility response from the NWDAF 11k transmits first sensing information to the UE 2 as a sensing response. The first sensing information includes information corresponding to an area in which the detection target object exists, the shape of the detection target object, a movement speed, travel direction information, and the like.

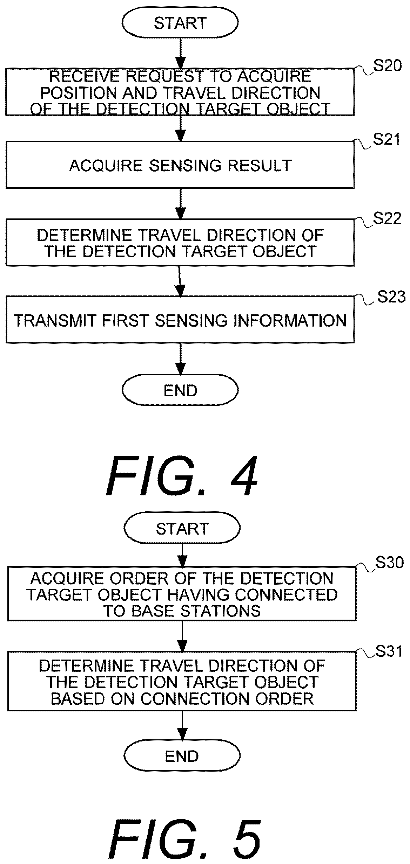

Next, a process executed by the controller of the system 100 according to the embodiment will be described. Fig. 4 is a flowchart of the sensing process executed by the controller of the system 100 according to the embodiment. Specifically, the process illustrated in Fig. 4 may be executed by the processor 41 of the information processing apparatus 20 that is capable of operating as the system 100.

First, at step S20, the controller receives a request to acquire the position and travel direction of a detection target object from the UE 2. From the UE 2, the controller receives a request message indicating that, as information about the detection target object, an area in which the detection target object exists, the shape of the detection target object, the movement speed of the detection target object, and travel direction information about the detection target object are requested. The acquisition request does not have to include a request to acquire the position of the detection target object.

Next, at step S21, the SENSING 11m acquires a result of sensing of the detection target object (sensing information). For example, the SENSING 11m may communicate with a base station and acquire a result of wireless sensing that the base station has performed for the detection target object. Further, the SENSING 11m may communicate with a UE other than the UE 2 to acquire a result of wireless sensing that the other UE has performed for the detection target object.

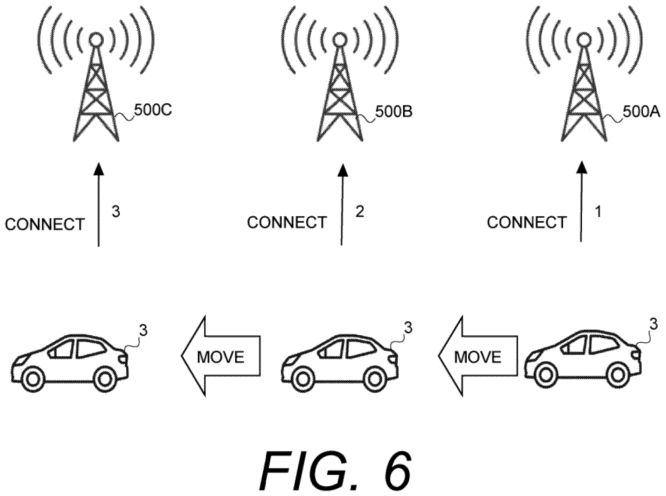

Next, at step S22, the SENSING 11m determines the travel direction of the detection target object from the result of sensing of the detection target object. A process for the SENSING 11m to determine the travel direction of the detection target object will be described in detail with reference to Figs. 5 and 6.

Next, at step S23, the controller transmits first sensing information to the UE 2. Here, the first sensing information is information indicating the result of performing sensing of the detection target object and may include the area in which the detection target object exists, the shape of the detection target object, the movement speed of the detection target object, and the travel direction information about the detection target object. The controller acquires the result of wireless sensing having been performed for the detection target object and transmits the information that includes the position, travel direction, and the like of the detection target object to the UE 2. The first sensing information does not have to include the position of the detection target object.

As for a method of expressing the travel direction information included in the first sensing information, various aspects are assumed. A first example is an expression of travel, with a UE (the first terminal) included in the request message as a reference. For example, the travel direction of the detection target object may be expressed by whether it is the same as the first terminal or an opposite direction or may be expressed as an angle with the movement direction of the first terminal as a reference. A second example is an expression of the travel direction of the detection target object using at least two base stations. In this case, the travel direction can be identified as a direction from a first base station cell toward a second base station cell. In the second example, a handover history of the detection target object may be included in the first sensing information as it is. A third example is a method of expressing the travel direction of the detection target object using a UE in the same travel direction as the detection target object. A fourth example is a method of expressing the travel direction of the detection target object as a direction such as the north, south, east, or west or as an azimuth.

Fig. 5 is a flowchart of a process for determining the travel direction of an object based on order of having connected to base stations, which is executed by the controller of the system 100 according to the embodiment. For example, the system 100 can determine the travel direction of a detection target object based on a history of connections of the detection target object with base stations. A method for determining the travel direction of a detection target object is not limited thereto.

First, at step S30, the controller acquires order of a detection target object having connected to base stations. At step S31, the controller determines the travel direction of the detection target object based on the acquired order of connections with the base stations. If the detection target object is an object that connects to base stations by wireless communication, the controller acquires a history of connections with a plurality of base stations and judges which of the plurality of base stations the detection target object has connected in order. Since the detection target object connects to a nearby base station in an area the detection target object is located at each point of time as it moves, a direction in which the base stations are arranged in order of connecting to the detection target object may be determined as the travel direction of the detection target object. Specifically, the SENSING 11m may acquire statistical information associated with the UE ID of the detection target object from the NWDAF 11k. The statistical information includes the handover history of the detection target object.

The method for determining the travel direction of a detection target object is not limited thereto. The controller may determine the travel direction of a detection target object from a history of positions of detection of the detection target object. In this case, the travel direction of the detection target object is indicated, for example, by an azimuth.

Fig. 6 is a conceptual diagram illustrating that the first terminal of the system 100 according to the embodiment connects to a plurality of base stations. A detection target object (for example, any UE 3) sequentially connects to a corresponding base station in each cell where the detection target object is located as it moves. The system 100 has a function of determining a relative direction between a UE (a terminal) that has transmitted a request for sensing of a detection target object and the detection target object. Therefore, the system 100 can relatively determine the travel direction of the detection target object from the travel directions of the detection target object and the UE (the terminal) that has transmitted the sensing request.

Specifically, as illustrated in Fig. 6, the UE 3 connects to a base station 500A first. Then, the UE 3 releases the connection to the base station 500A and connects to a base station 500B as it moves. Further, the UE 3 releases the connection to the base station 500B and connects to a base station 500C as it further moves.

Thus, the UE 3 sequentially connects to each of a plurality of base stations. Then, the system 100 can relatively determine the travel direction of the detection target object based on the travel direction of the UE 3 determined from a history of connections to the plurality of base stations.

The controller of the system 100 may notify the travel direction of the detection target object with an azimuth or with order of the connected base stations.

As a method for notifying the travel direction of a detection target object, a plurality of methods are assumed. Each of them will be described below.

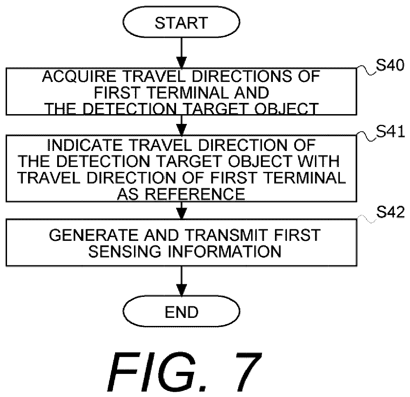

Fig. 7 is a flowchart illustrating a process of the controller of the system 100 according to the embodiment in the case of notifying the travel direction of a detection target object, with the movement direction of the first terminal as a reference. In this case, the ID of the first terminal is included in a request message.

First, at step S40, the controller acquires the travel directions of the first terminal and a detection target object. At step S40, each of the travel directions of the first terminal and the detection target object may be acquired, or relative travel directions of the first terminal and the detection target object may be acquired. Each of the travel directions can be acquired by the method described above. The relative travel directions can be acquired, for example, by the method specified in TS23.273 6.20.

At step S41, the controller indicates the travel direction of the detection target object with the travel direction of the first terminal as a reference. As an example, the controller may determine whether the travel direction of the detection target object is the same direction as the travel direction of the first terminal or an opposite direction or determine an angle of the movement direction of the detection target object, with the travel direction of the first terminal as a reference. At step S42, first sensing information that indicates travel direction information about the detection target object is generated, and the first sensing information is included in a sensing response and transmitted to the UE 2.

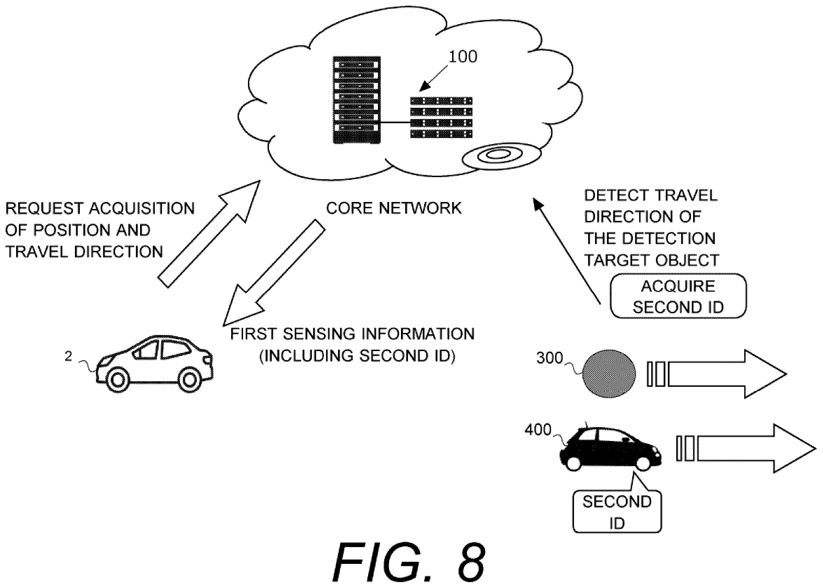

Fig. 8 is a conceptual diagram of a process in the case of notifying the travel direction of a detection target object using another UE in the same travel direction. For example, at the time of notifying the travel direction of a sensing target object, the system 100 can notify the travel direction using the ID (a second ID) of another UE that goes in the same travel direction as the detection target object.

First, the UE 2 transmits a request message requesting sensing data, to the system 100. Then, the system 100 acquires the travel direction and the like of an object 300 which is a detection target object.

Next, the system 100 detects another UE (a second UE) that travels in the same direction as the travel direction of the detection target object 300 and acquires the UE ID thereof. The UE ID will be referred to as a second ID. It is desired that the UE 2 already knows the travel direction of the second UE. Therefore, the UE 2 may notify the system 100 of candidates for the second UE in advance, and the system 100 may select the second UE from among the candidates. Alternatively, the system 100 may assume that the UE 2 grasps the travel direction of a UE near the UE 2 and select the UE near the UE 2 as the second UE.

Then, the system 100 includes the second ID in the first sensing information and transmits the first sensing information to the UE 2.

### <Operation of UE>

First, the UE 2 transmits a request to acquire information that indicates the position and travel direction of a detection target object, to the system 100 (the core network). The UE 2 transmits a request message to request sensing data, to the SENSING 11m via the AF 12 included in the system 100. The acquisition request does not have to include a request for information about the position of the detection target object.

Next, the UE 2 acquires first sensing information, which is a result of sensing of the detection target object, indicating the travel direction of the detection target object. The first sensing information includes information corresponding to an area in which the detection target object exists, the shape of the detection target object, a movement speed, a flag indicating a travel direction (UE ID), and the like.

### <Other modifications>

The embodiment described above is a mere example, and the present disclosure can be appropriately changed and practiced within a range not departing from the spirit thereof.

Though it is assumed that the system 100 acquires a result of wireless sensing of a sensing target object in the embodiment described above, a result of sensing of a sensing target object having been performed may be acquired by a UE other than the first terminal (the UE 2).

Though provision of data for a user terminal is performed in a request-response scheme in the embodiment described above, the provision may be performed by a subscribe-notify scheme.

The present disclosure can be realized by supplying a computer program implemented with the functions described in the above embodiment to a computer, and one or more processors of the computer reading out and executing the program. Such a computer program may be provided for the computer by a non-transitory computer-readable storage medium connectable to the system bus of the computer or may be provided for the computer via a network. As the non-transitory computer-readable storage medium, for example, any type of disk such as a magnetic disk (a floppy (R) disk, a hard disk drive (HDD), or the like) and an optical disc (a CD-ROM, a DVD disc, a Blu-ray disc, or the like), a read-only memory (ROM), a random-access memory (RAM), an EPROM, an EEPROM, a magnetic card, a flash memory, an optical card, and any type of medium that is appropriate for storing electronic commands are included.

## Claims

1. A system (100) constituting a wireless communication network, the system (100) comprising a processor (21), and the processor (21) being configured to execute;
receiving an acquisition request to acquire information indicating a travel direction of a detection target object (300); and
transmitting, based on the acquisition request, first sensing information, which is a sensing result of the detection target object (300), the first sensing information including information indicating the travel direction of the detection target object (300).

2. The system (100) according to claim 1, wherein
the acquisition request includes a first ID, which is an ID of a first terminal (40), the first terminal (40) being a terminal connected to the wireless communication network; and
the processor (21) transmits the travel direction of the detection target object (300) determined with a travel direction of the first terminal (40) as a reference, based on the first ID, including the travel direction in the first sensing information.

3. The system (100) according to claim 2, wherein
the processor (21) judges, based on the first ID, whether travel directions of the first terminal (40) and the detection target object (300) are same or not, and
transmits a result of the judgment as the information indicating the travel direction, including the result of the judgment in the first sensing information.

4. The system (100) according to any preceding claim, wherein
the processor (21) transmits a second ID, which is an ID of a second terminal in the same travel direction as the travel direction of the detection target object (300), as the information indicating the travel direction, including the second ID in the first sensing information.

5. The system (100) according to any preceding claim, wherein
the processor (21) transmits order of the detection target object (300) having connected to a plurality of base stations as the information indicating the travel direction, including the order in the first sensing information.

6. A terminal (2) executing:
transmitting an acquisition request to acquire information indicating a travel direction of a detection target object (300), to a core network; and
acquiring, from the core network, first sensing information, which is a sensing result of the detection target object (300), including information indicating the travel direction of the detection target object (300).
